# EUROPÄISCHE PATENTANMELDUNG

(11) **EP 1 780 452 A2**
(43) Veröffentlichungstag der Anmeldung: **02.05.2007**
(21) Anmeldenummer: 06120367.5
(22) Anmeldetag: 08.09.2006
(51) Int. Cl.: F16K 17/04

(54) **Druckminderer**

(30) Priorität: 31.10.2005 DE 102005052385
(71) Anmelder: HANS SASSERATH & CO KG, 41352 Korschenbroich (DE)
(72) Erfinder: Hecking, Willi, 41372, Niederkrüchten-Elmpt (DE)
(74) Vertreter: Weisse, Renate

(57) **Zusammenfassung**

Eine Druckminderer-Baugruppe mit einem Einlass (14) und einem Auslass (18), welche über ein Ventil verbindbar sind, mit einem feststehenden Ventilteller (42) und einem mit dem Ventilteller zusammenwirkenden Ventilsitzkörper (62), der von einem mit dem Ausgangsdruck in Schließrichtung beaufschlagten Hubglied gegen die Wirkung einer als Schraubenfeder (50) ausgebildeten Vorlast verstellbar ist, ist dadurch gekennzeichnet, daß der Einlass und der Raum (68) stromaufwärts von dem Ventilsitz (74) über eine axiale Bohrung (36) in einer mit dem Ventilteller (42) verbundenen Ventilspindel (34) verbunden sind, der Ventilsitzkörper (62) topfförmig ausgebildet und auf der Ventilspindel (34) verschiebbar geführt ist, und die Schraubenfeder (50) koaxial zu der Bohrung (36) die Ventilspindel (34) umgibt, und zwischen einem an der Ventilspindel (34) vorgesehenen, ringförmigen Federwiderlagerkörper (38) und dem topfförmigen Ventilsitzkörper (62) wirkt. Die Baugruppe kann als ganzes patronenartig in ein rohrförmiges Gehäuse einsetzbar sein.

## Beschreibung

### Technisches Gebiet

Die Erfindung betrifft eine Druckminderer-Baugruppe mit einem Einlass und einem Auslass, welche über ein Ventil verbindbar sind, mit einem feststehenden Ventilteller und einem mit dem Ventilteller zusammenwirkenden Ventilsitzkörper, der von einem mit dem Ausgangsdruck in Schließrichtung beaufschlagten Hubglied gegen die Wirkung einer als Schraubenfeder ausgebildeten Vorlast verstellbar ist.

### Stand der Technik

Druckminderer dienen dazu, einen Ausgangsdruck einer Flüssigkeit auf einen vorgegebenen Wert zu begrenzen. Sie enthalten ein Ventil, das von einem Hubglied gesteuert ist. Das Hubglied, üblicherweise eine Membran, wird vom Ausgangsdruck gegen die Wirkung einer Vorlast, üblicherweise eine Feder, beaufschlagt. Wenn der Ausgangsdruck steigt, wird das Ventil weiter geöffnet. Druckminderer sind üblicherweise in einem Gehäuse mit einem Einlaß und einem Auslaß integriert. In das Gehäuse ist die als Hubglied dienende Membran eingespannt.

Es sind Druckminderer bekannt, bei denen der Ventilteller des Ventils feststehend, d.h. gehäusefest angeordnet sind, während ein gleichzeitig als Ventilsitz und Hubglied dienender Ventilsitzkörper relativ zu dem feststehenden Ventilteller beweglich ist. Dadurch kann die im Langzeitbetrieb störanfällige Membran vermieden werden.

Bei einer bekannten Druckminderer Baugruppe sind Einlaß und Auslaß koaxial in einer Rohrleitung angeordnet. Der Ventildurchgang verläuft in radialer Richtung senkrecht zur Einlaß- und Auslaßachse. Die als Vorlast dienende Schraubenfeder sitzt in einem vorspringenden Gehäuse.

### Offenbarung der Erfindung

Es ist Aufgabe der Erfindung, eine Anordnung der eingangs genannten Art zu schaffen, die besonders kompakt und einfach aufgebaut ist. Es ist ferner Aufgabe der Erfindung, eine Druckminderer-Baugruppe zu schaffen, die in das Innere einer Rohrleitung einbaubar ist.

Erfindungsgemäß wird die Aufgabe bei einem Druckminderer der eingangs genannten Art dadurch gelöst, daß
(a) der Einlass und der Raum stromaufwärts von dem Ventilsitz über eine axiale Bohrung in einer mit dem Ventilteller verbundenen Ventilspindel verbunden sind,
(b) der Ventilsitzkörper topfförmig ausgebildet und auf der Ventilspindel verschiebbar geführt ist,
(c) die Schraubenfeder koaxial zu der Bohrung die Ventilspindel umgibt, und zwischen einem an der Ventilspindel vorgesehenen, ringförmigen Federwiderlagerkörper und dem topfförmigen Ventilsitzkörper wirkt.

Bei dieser Anordnung verlaufen der Ventildurchgang und die Ventilspindel koaxial zur Durchflußrichtung zwischen Einlass und Auslass. Damit kann der Druckminderer in das Innere einer Rohrleitung eingebaut werden, ohne, daß Teile der Anordnung nach außen vorspringen. Es braucht keine aufwändige Membran verwendet werden. Durch die Nutzung des Inneren der Ventilspindel als Durchgangskanal können die Abmessungen gering gehalten werden. Es ist nur ein Ventilsitzkörper erforderlich.

Vorzugsweise ist die Baugruppe als ganzes patronenartig in ein rohrförmiges Gehäuse einsetzbar. Dann kann der Druckminderer einfach ausgetauscht und/oder gewartet werden.

Vorzugsweise ist der Federwiderlagerkörper topfförmig ausgebildet und weist stromabwärts eine Ringnut auf, in welcher die Schraubenfeder angeordnet ist. Dadurch wird eine besonders kompakte Anordnung erreicht.

Im Einlass kann ein zylinderförmiges Schmutzsieb vorgesehen sein.

Der Ventilteller ist in einer bevorzugten Ausgestaltung der Erfindung am auslaßseitigen Ende der Ventilspindel angeordnet und die Bohrung in der Ventilspindel ist über einen radial verlaufenden Kanal mit dem Hohlraum stromaufwärts von dem Ventilsitz verbunden. Das Wasser fließt also vom Einlass durch die Ventilspindel, durch den radialen Kanal in den Hohlraum vor dem Ventilsitz. Von da gelangt es durch das geöffntete Ventil zum Auslass.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine geschnittene Ansicht durch einen Druckminderer in geöffneter Stellung
- Fig.2: ist eine vergrößerte Ansicht des Druckminderers aus Fig. 1 in geschlossener Stellung
- Fig.3: zeigt den Druckminderer aus Fig.2 in geöffneter Stellung
- Fig.4: zeigt einen Druckminderer, der in eine Rohrleitung eingebaut ist.

### Beschreibung des Ausführungsbeispiels

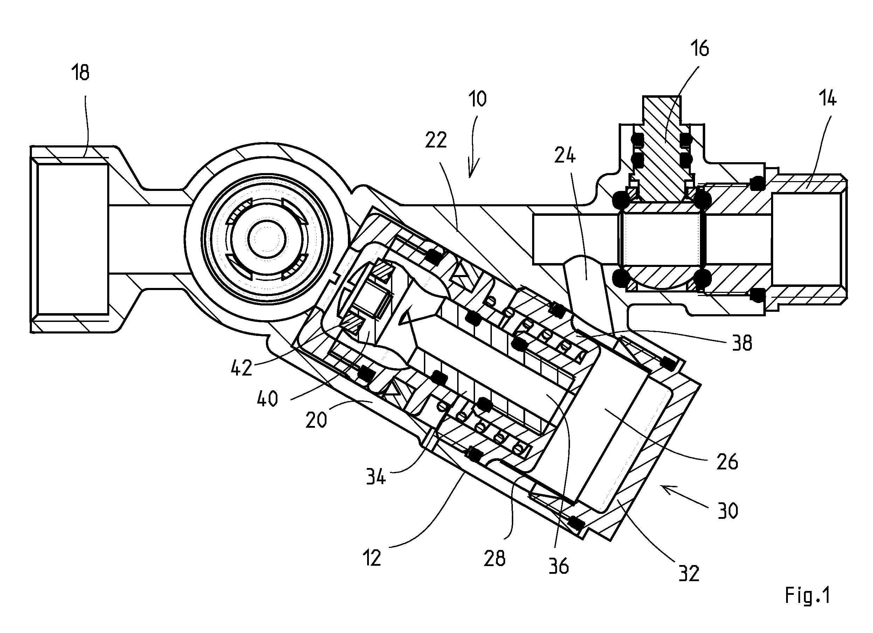

In Fig. 1 ist eine Armatur 10 mit einem Druckminderer 12 dargestellt. Die Armatur 10 umfasst einen Einlass 14 zum Anschluß an eine Trinkwasserversorgung (nicht dargestellt). Der Einlass 14 ist mit einem Absperrhahn 16 absperrbar. Zwischen dem Absperrhahn 16 und einem Auslass 18 ist der allgemein mit 12 bezeichnete Druckminderer vorgesehen. Der Druckminderer 12 ist in einem an das Armaturengehäuse 22 angeformten Gehäuseteil 20 angeordnet. Das Wasser fließt vom Einlass 14 durch einen Kanal 24 in einen Eingangskammer 26. Der Gehäuseteil 20 ist rohrförmig ausgebildet, wobei die Mittenachse einen Winkel mit der Mittenachse des übrigen Gehäuses bildet. Im Bereich der Eingangskammer 26 ist ein zylindrisches Schmutzsieb 28 angeordnet, welches die Eingangskammer 26 von dem Kanal 24 abdeckt. Der Gehäuseteil 20 ist an einem Ende 30 mit einem abnehmbaren Deckel 32 versehen. Auf diese Weise wird das Innere des rohrförmigen Gehäuseteils 20 z.B. zu Wartungszwecken oder zum Austauschen des Druckminderers zugänglich.

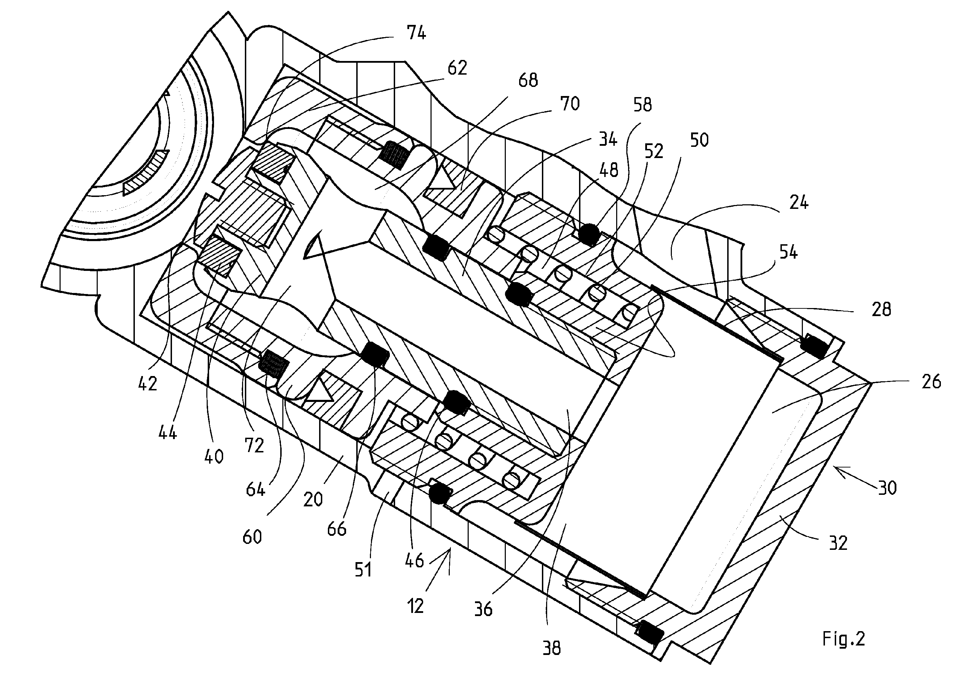

Der Druckminderer umfasst eine gehäusefeste Ventilteller-Baugruppe und eine bewegliche Ventilsitzkörper-Baugruppe (Fig.2). Die gehäusefeste Ventilteller-Baugruppe umfasst eine Ventilspindel 34. Die Ventilspindel 34 ist langgestreckt und mit einer axialen Mittenbohrung 36 versehen. Die Mittenbohrung 36 mündet einlaßsseitig in der Eingangskammer 26.

Einlaßseitig ist konzentrisch um die Ventilspindel herum ein topfförmiger Federwiderlagerkörper 38 vorgesehen, der auf die Ventilspindel 34 aufgeschraubt ist. Der Federwiderlagerkörper 38 weist im Bereich der Bohrung 36 ebenfalls einen Durchgang auf. Das andere, auslaßseitige Ende 40 der Ventilspindel 34 ist etwas verbreitert. In diesem so gebildeten Kopf ist eine als Ventilteller wirkendes Dichtteil 42 eingeschraubt. Das Dichtmittel wirkt mit einer Dichtung 44 zusammen, die in einer Ringnut im Kopf 40 der Ventilspindel 34 angeordnet ist.

Zwischen dem topfförmigen Federwiderlagerkörper 38 und der damit fest verbundenen Ventilspindel 34 ist eine Dichtung 46 in Form eines O-Rings angeordnet. Der Federwiderlagerkörper 38 ist mit einer stromabwärts offenen, tiefe Ringnut 48 versehen.

Durch die Ringnut 48 werden zwei konzentrische, zylindrische Wandungen 52 und 54 gebildet. In der Ringnut 48 ist eine Schraubenfeder 50 angeordnet, die sich am Ende der Ringnut 48 in dem Federwiderlagerkörper 38 abstützt. Der Federwiderlagerkörper ist mit einer Dichtung 58 gegen das Gehäuse 20 abgedichtet und mit diesem verschraubt. Im Bereich der Feder 50 herrscht Atmosphärendruck, da er über eine Öffnung 51 mit dem Außenraum des Gehäuses verbunden ist.

Die Feder 52 wirkt auf die Ventilsitz-Baugruppe. Diese ist auf der gehäusefesten Ventilspindel 34 beweglich geführt. Die Ventilsitz-Baugruppe umfasst eine Schiebehülse 60 und einen darauf aufgeschraubten Ventilsitzkörper 62. Der Ventilsitzkörper 62 ist topfförmig und wirkt zusammen mit dem Ventilteller 42 als Regelventil. Zwischen Ventilsitzkörper 62 und Schiebehülse 60 ist eine Dichtung 64 angeordnet.

Die Schiebehülse 60 ist im wesentlichen rohrförmig. Sie ist mit dem stromaufwärtigen Teil auf der Ventilspindel 34 geführt und mit einer Dichtung 66 gegen diese abgedichtet. Der Innendurchmesser der Schiebehülse 62 verbreitert sich im Bereich des Kopfes der Ventilspindel 34. Dadurch wird zwischen Ventilspindel 34 und Schiebehülse 62 ein Hohlraum 68 im Bereich vor dem Ventil gebildet. Die Schraubenfeder 52 drückt gegen die Schiebehülse.

Die Schiebehülse weist außen eine Ringnut auf, in der eine Dichtung 70 vorgesehen ist, mit der die Schiebehülse gegenüber dem Gehäuse 20 abgedichtet wird.

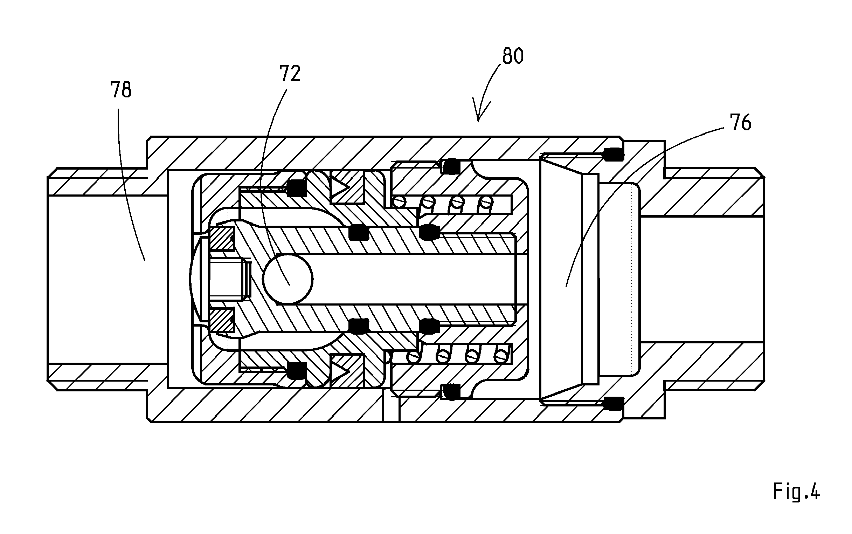

Die Ventilspindel 34 weist vor dem Bereich des Kopfes eine radial verlaufende Querbohrung 72 auf. Diese ist in Fig. 4, das ein weiteres Ausführungsbeispiel zeigt, in einem anderen Schnitt ebenfalls zu erkennen. Über die Querbohrung 72 und den Kanal 36 steht der Raum vor dem Ventil mit der Eingangskammer 26 in Verbindung.

Der Druckminderer arbeitet wie folgt:

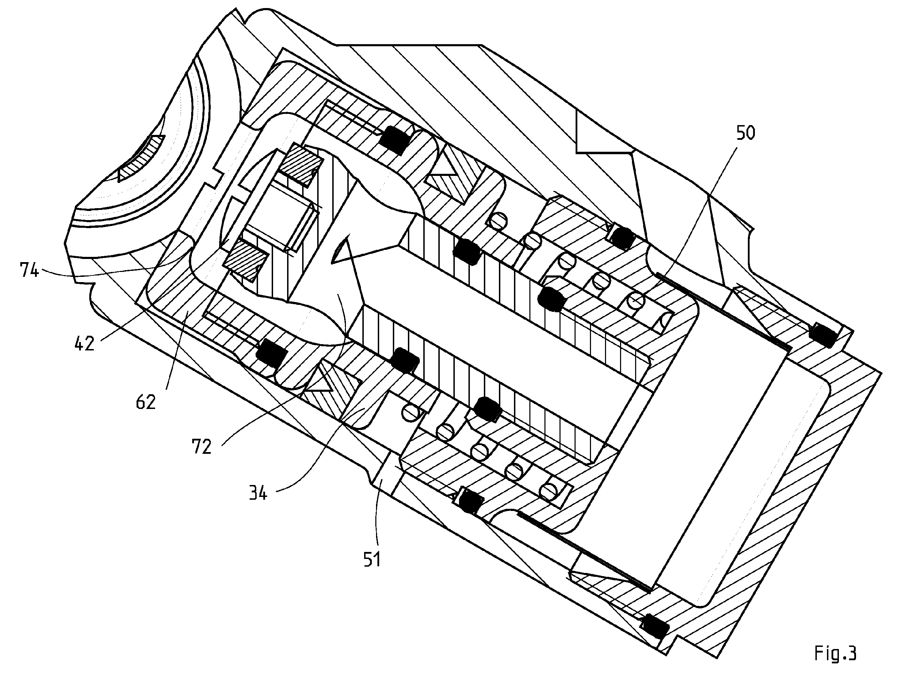

Der Ausgangsdruck im Ausgang wirkt auf die ringförmige, äußere Stirnfläche des Ventilsitzkörpers 62 der Kraft der Schraubenfeder 52 entgegen. Dadurch wird die Ventilsitz-Baugruppe aus Ventilsitzkörper 62 und Schiebehülse 60 nach links oben in Fig.2 gedrückt. Der Ringspalt des Regelventils zwischen dem feststehenden Ventilteller 42 und dem Ventilsitz 74 des Ventilsitzkörpers 62 wird gedrosselt. Sinkt der Ausgangsdruck im Auslass, dann wird die Kraft auf den Ventilsitzkörper 62 geringer. Die Kraft der Schraubenfeder 50 überwindet den Auslaßdruck und bewegt die Ventilsitz-Baugruppe nach links oben in Fig.1, also vom feststehenden Ventilteller 42 weg. Dadurch wird der Ringspalt vergrößert, so daß der Ausgangsdruck wieder ansteigen kann. Diese Situation ist in Fig.3 dargestellt. Der auf den Ventilteller wirksame Ausgangsdruck wird von der Ventilspindel 34 und über diese vom Gehäuse aufgenommen.

Das in den Figuren 1 bis 3 dargestellte Ausführungsbeispiel zeigt eine Variante, bei der die gesamte Druckminderer-Anordnung unter einem Winkel in eine Armatur eingebaut ist. Die Anordnung ist dadurch über den Deckel 32 jederzeit zugänglich. Die Armatur kann aber bei entsprechender Dimensionierung direkt in eine Rohrleitung eingebaut werden. Dies ist in Fig. 4 gezeigt.

Da Einlaß und Auslaß 78 an den jeweiligen Enden der Druckminderer-Anordnung 80 vorgesehen sind, kann eine lineare Anordnung erreicht werden, ohne daß seitliche Kanäle vorgesehen sind.

## Patentansprüche

1. Druckminderer-Baugruppe (10) mit einem Einlass (26) und einem Auslass (78), welche über ein Ventil verbindbar sind, mit einem feststehenden Ventilteller (42) und einem mit dem Ventilteller (42) zusammenwirkenden Ventilsitzkörper (62), der von einem mit dem Ausgangsdruck in Schließrichtung beaufschlagten Hubglied gegen die Wirkung einer als Schraubenfeder (50) ausgebildeten Vorlast verstellbar ist, **dadurch gekennzeichnet, daß**
(a) der Einlass und der Raum (68) stromaufwärts von dem Ventilsitz (74) über eine axiale Bohrung (36) in einer mit dem Ventilteller (42) verbundenen Ventilspindel (34) verbunden sind,
(b) der Ventilsitzkörper (62) topfförmig ausgebildet und auf der Ventilspindel (34) verschiebbar geführt ist,
(c) die Schraubenfeder (50) koaxial zu der Bohrung (36) die Ventilspindel (34) umgibt, und zwischen einem an der Ventilspindel (34) vorgesehenen Federwiderlagerkörper (38) und dem topfförmigen Ventilsitzkörper (62) wirkt.

2. Druckminderer-Baugruppe nach Anspruch 1, **dadurch gekennzeichnet, daß** die Baugruppe als ganzes patronenartig in ein rohrförmiges Gehäuse (20) einsetzbar ist.

3. Druckminderer-Baugruppe nach einem der vorgehenden Ansprüche, **dadurch gekennzeichnet, daß** der Federwiderlagerkörper (38) topfförmig ausgebildet ist und stromabwärts eine Ringnut (48) aufweist in welcher die Schraubenfeder (50) angeordnet ist.

4. Druckminderer-Baugruppe nach einem der vorgehenden Ansprüche, **gekennzeichnet durch** ein zylinderförmiges Schmutzsieb (28) im Einlass.

5. Druckminderer Baugruppe nach einem der vorgehenden Ansprüche, **dadurch gekennzeichnet, daß** der Ventilteller (42) am auslaßseitigen Ende der Ventilspindel (34) angeordnet ist und die Bohrung in der Ventilspindel über einen radial verlaufenden Kanal (72) mit dem Hohlraum (68) stromaufwärts von dem Ventilsitz (74) verbunden ist.
